# EUROPEAN PATENT APPLICATION

(11) **EP 4 814 651 A1**
(43) Date of publication of application: **30.09.2026**
(21) Application number: 26160155.3
(22) Date of filing: 23.02.2026
(51) Int. Cl.: G06F 1/16

(54) **DISPLAY DEVICE AND ELECTRONIC DEVICE INCLUDING THE SAME**

(30) Priority: 26.03.2025 KR 20250038736
(71) Applicant: Samsung Display Co., Ltd., Yongin-si, Gyeonggi-do 17113 (KR)
(72) Inventor: PARK, In Soo, 17113 Yongin-si (KR); PARK, Sanghyo, 17113 Yongin-si (KR); KIM, Youngmin, 17113 Yongin-si (KR); NAM, Jieun, 17113 Yongin-si (KR); AHN, Sungsang, 17113 Yongin-si (KR); LEE, Suhun, 17113 Yongin-si (KR); LEE, Yunyoung, 17113 Yongin-si (KR)
(74) Representative: Walaski, Jan Filip

(57) **Abstract**

A display device includes a display unit. A frame supports the display unit below the display unit. A case accommodates the display unit and the frame. A hinge assembly includes a hinge cover. At least one first hinge module seated on the hinge cover. At least one second hinge module seated on the hinge cover. The at least one first hinge module may control rotation of the frame. The at least one second hinge module may control rotation of the case.

## Description

### 1. TECHNICAL FIELD

The present disclosure relates to a display device and an electronic device including the same. More particularly, the present disclosure relates to a display device including a hinge assembly and an electronic device including the same.

### 2. DISCUSSION OF RELATED ART

A display device is a device that displays an image for providing visual information to a user. Flexible display devices provide a wide display screen while increasing portability or space utilization of a display device by using a material having flexible characteristics are receiving increased attention along with the advancement of the information society. For example, a bendable display device in which a display panel can be bent, a rollable display device in which a display panel can be rolled, and a foldable display device in which a display panel can be folded are being developed.

Foldable display devices may include a hinge assembly. According to a folding operation of the hinge assembly, the flexible display device may be folded. In addition, according to an unfolding operation of the hinge assembly, the flexible display device may be unfolded for increased portability and user convenience.

### SUMMARY

Embodiments provide a display device with increased quality.

Embodiments provide an electronic device including the display device.

A display device according to embodiment includes a display device including a display unit. A frame supports the display unit below the display unit. A case accommodates the display unit and the frame. A hinge assembly includes a hinge cover. At least one first hinge module seated on the hinge cover. At least one second hinge module seated on the hinge cover. The at least one first hinge module may control rotation of the frame. The at least one second hinge module may control rotation of the case.

In an embodiment, the case may include a first case located at a first side of the hinge cover and a second case located at an opposite second side of the hinge cover, and the at least one second hinge module may control rotation of the first case and rotation of the second case.

In an embodiment, the frame may include a first frame located at a first side of the hinge cover and a second frame located at an opposite second side of the hinge cover, and the at least one first hinge module may control rotation of the first frame and rotation of the second frame.

In an embodiment, the case may include at least one first through hole, each of the at least one second hinge module may include at least one second through hole, and the case and each of the at least one second hinge module may be coupled to each other by a coupling member inserted into the at least one first through hole and the at least one second through hole.

In an embodiment, the frame may include at least one first through hole, each of the at least one first hinge module may include at least one second through hole, and the frame and each of the at least one first hinge module may be coupled to each other by a coupling member inserted into the at least one first through hole and the at least one second through hole.

In an embodiment, the frame may directly contact a lowermost end of the display unit, and the case may directly contact an uppermost end of the display unit.

In an embodiment, the display unit may include a metal plate directly contacting the frame, a display panel located on the metal plate, a cover window located on the display panel, and a protecting film located on the cover window and directly contacting the case.

In an embodiment, the case may include a bottom portion and a side portion extending from the bottom portion, and the bottom portion of the case may include a coupling hole accommodating at least a portion of the frame.

In an embodiment, the frame may include a flat portion directly contacting the display unit and a protrusion portion protruding from the flat portion and accommodated by the coupling hole.

In an embodiment, a width of the protrusion portion in a first direction may be less than a width of the coupling hole in the first direction.

In an embodiment, the protrusion portion may move in the first direction within the coupling hole during a folding operation of the hinge assembly when the display device moves from an unfolded state to a folded state.

In an embodiment, the frame may be fixed to the case through a washer in the coupling hole.

In an embodiment, the case may include a bottom portion and a side portion extending from the bottom portion, and during a folding operation of the hinge assembly, a separation distance in a plan view between a first end of the frame and the side portion of the case may increase when the display device moves from an unfolded state to a folded state.

In an embodiment, the display unit may include a metal plate, a display panel attached to an upper surface of the metal plate by a first adhesive member, a cover window attached to an upper surface of the display panel by a second adhesive member, and a protecting film attached to an upper surface of the cover window by a third adhesive member and fixed to the side portion of the case, and during the folding operation of the hinge assembly, each of a separation distance in the plan view between a first end of the first adhesive member and the side portion of the case, a separation distance in the plan view between a first end of the second adhesive member and the side portion of the case, and a separation distance in the plan view between a first end of the third adhesive member and the side portion of the case may increase when the display device moves from an unfolded state to a folded state.

In an embodiment, the case may include a bottom portion and a side portion extending from the bottom portion, the side portion of the case may include a groove accommodating at least a portion of the frame, and the frame may include a central portion directly contacting the display unit and an extension portion extending directly from the central portion and accommodated by the groove.

In an embodiment, the extension portion may move within the groove during a folding operation of the hinge assembly.

In an embodiment, the at least one first hinge module may include a first-first hinge module, a second-first hinge module and a third-first hinge module. The at least one second hinge module may include a first-second hinge module and a second-second hinge module. The first-first hinge module and the second-first hinge module may be spaced apart from each other with the second-first hinge module positioned therebetween in a plan view. The second-first hinge module and the third-first hinge module may be spaced apart from each other with the second-second hinge module positioned therebetween in the plan view.

A display device according to an embodiment includes a display unit, a frame supporting the display unit below the display unit, a case accommodating the display unit and the frame, and a hinge assembly including a hinge cover, at least one first hinge module seated on the hinge cover, and at least one second hinge module seated on the hinge cover. In an embodiment, the at least one first hinge module may control rotation of a lowermost end of the display unit. The at least one second hinge module may control rotation of an uppermost end of the display unit.

In an embodiment, the frame may directly contact the lowermost end of the display unit, and the case may directly contact the uppermost end of the display unit.

An electronic device according to embodiments includes a memory configured to store data information, a display unit, a frame supporting the display unit below the display unit, a case accommodating the display unit and the frame, and a hinge assembly including a hinge cover, at least one first hinge module seated on the hinge cover, and at least one second hinge module seated on the hinge cover. The first hinge module may control rotation of the frame. The second hinge module may control rotation of the case.

A display device according to embodiments includes a display unit, a frame supporting the display unit below the display unit, a case accommodating the display unit and the frame, and a hinge assembly including a hinge cover, a first hinge module seated on the hinge cover, and a second hinge module seated on the hinge cover. The first hinge module may control rotation of the frame. The second hinge module may control rotation of the case.

Accordingly, a dead space of the display device may be reduced. In addition, deterioration of components of the display unit may be prevented, and wrinkles, cracks, and/or the like in the components of the display unit may be prevented.

### BRIEF DESCRIPTION OF THE DRAWINGS

Illustrative, non-limiting embodiments will be more clearly understood from the following detailed description in conjunction with the accompanying drawings.
FIG. 1A is a perspective view illustrating a state in which a display device is unfolded according to an embodiment.
FIG. 1B is a perspective view illustrating a state in which the display device of FIG. 1A is folded according an embodiment.
FIG. 2A is a perspective view illustrating a state in which a display device is unfolded according to an embodiment.
FIG. 2B is a perspective view illustrating a state in which the display device of FIG. 2A is folded according to an embodiment.
FIGS. 3 and 4 are cross-sectional views illustrating a plurality of components included in the display device of FIG. 1A or FIG. 1B according to embodiments.
FIG. 5 is a plan view schematically illustrating a hinge assembly according to an embodiment.
FIG. 6 is a front perspective view schematically illustrating a hinge cover, a second hinge module, a fourth hinge module, and a case according to an embodiment.
FIG. 7 is a rear perspective view schematically illustrating the hinge cover, the second hinge module, the fourth hinge module, and the case according to an embodiment.
FIG. 8 is a front perspective view schematically illustrating a portion of the hinge cover, the fourth hinge module, and the case of FIG. 6 according to an.
FIGS. 9 and 10 are views illustrating the hinge cover, the fourth hinge module, and the case of FIG. 6 viewed from a second direction according to embodiments.
FIG. 11 is a plan view schematically illustrating the hinge cover, a first hinge module, a third hinge module, a fifth hinge module, and a frame according to an embodiment.
FIG. 12 is a rear view schematically illustrating the hinge cover, the first hinge module, the third hinge module, the fifth hinge module, and the frame according to an embodiment.
FIGS. 13 and 14 are cross-sectional views illustrating the frame, the fifth hinge module, and the hinge cover of FIG. 11 taken along the line I-I' according to embodiments.
FIGS. 15 and 16 are enlarged cross-sectional views illustrating an example of an X area of FIG. 4 according to embodiments.
FIG. 17 is an enlarged cross-sectional view illustrating an example of an X area of FIG. 4 according to an embodiment.
FIG. 18 is a block diagram illustrating an electronic device according to an embodiment.
FIG. 19 is a schematic diagram of an electronic device according to various embodiments.

### DETAILED DESCRIPTION OF EMBODIMENTS

Hereinafter, display devices in accordance with non-limiting embodiments will be described in more detail with reference to the accompanying drawings. The same reference numerals are used for the same components in the drawings, and redundant descriptions of the same components will be omitted.

The present disclosure concerns a foldable display device that includes a frame supporting the display unit below the display unit and a case accommodating the display unit and the frame. A hinge assembly includes at least one first hinge module that controls rotation of the frame and at least one second hinge module that controls rotation of the case. The frame may directly contact the lowermost portion of the display unit and the case may directly contact an uppermost portion of the display unit.

The axis about which the at least one first hinge module rotates the frame and the axis about which the at least one second hinge module rotates the case may be different from each other, such as in a plan view. Therefore, rotation of the uppermost end of the display unit and the lowermost end of the display unit may be independently controlled.

Some components of the display unit may slip towards the folding area when the display device is folded from an unfolded state to a folded state. Accordingly, since the components slip towards the folding area, it is not necessary to provide a significant space to accommodate for the slipping components of the display unit during the folding operation and dead space may be reduced. Additionally, the slipped components may be restored to their original state when the display unit moves to an unfolded state. Therefore, deterioration of the display unit due to repeated folding may be reduced.

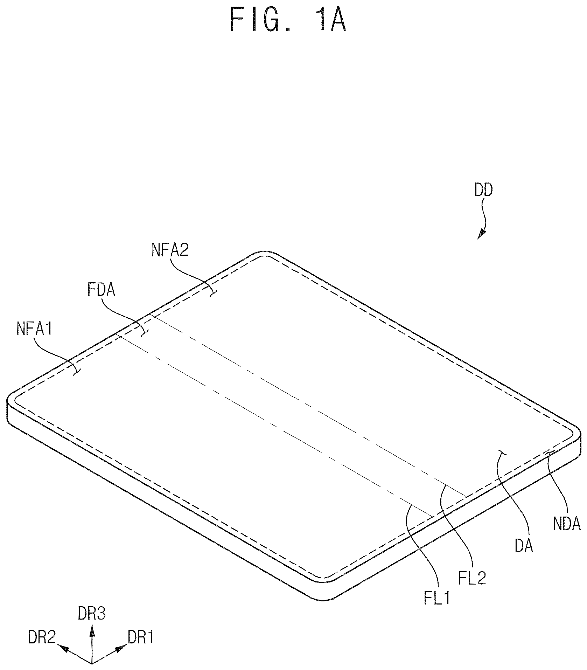

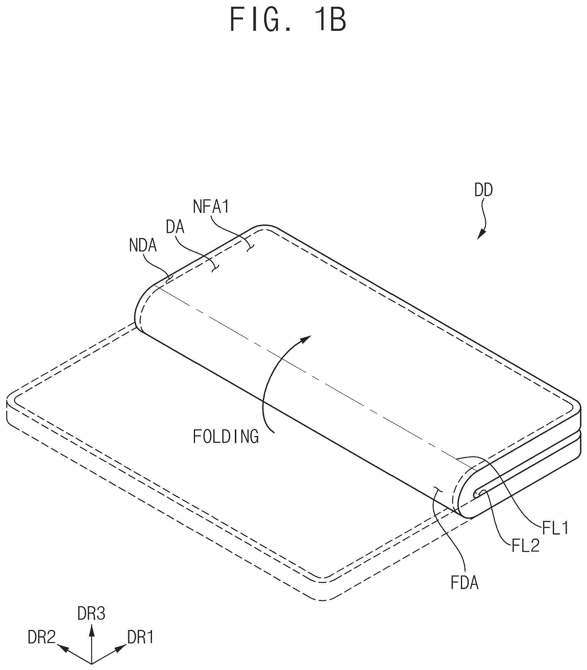

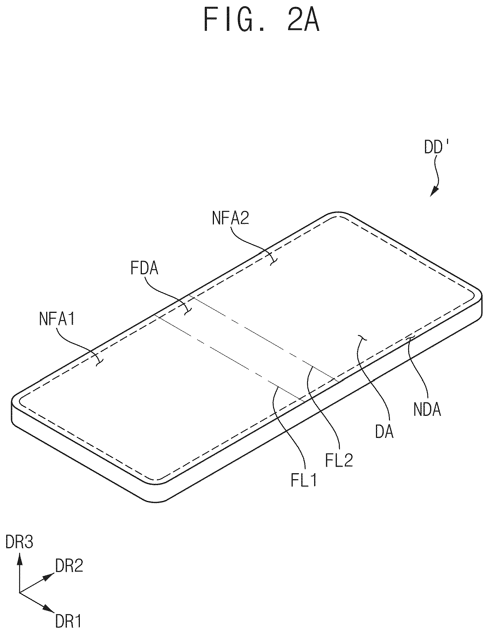

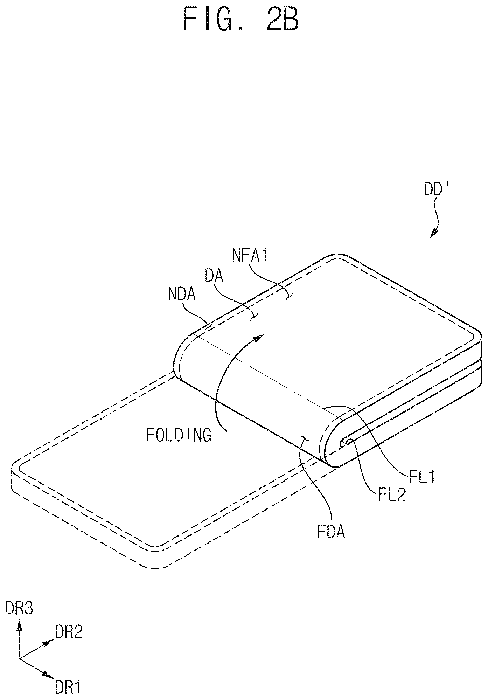

FIG. 1A is a perspective view illustrating a state in which a display device according to an embodiment is unfolded. FIG. 1B is a perspective view illustrating a state in which the display device of FIG. 1A is folded. FIG. 2A is a perspective view illustrating a state in which a display device according to an embodiment is unfolded. FIG. 2B is a perspective view illustrating a state in which the display device of FIG. 2A is folded.

Referring to FIGS. 1A, 1B, 2A, and 2B, display devices DD and DD' according to embodiments may be activated by an electrical signal. For example, the display devices DD and DD' may be small display devices used in small electronic devices such as smartphones, mobile phones, smart watches, game consoles, and cameras. However, embodiments are not necessarily limited thereto, and the display devices DD and DD' may be medium to large-sized display devices used in medium to large-sized electronic devices such as laptops, tablet PCs, televisions, computer monitors, vehicle monitors, and external billboards.

The display devices DD and DD' may include a display area DA and a non-display area NDA. The display area DA may be an area that generates light or adjusts transmissivity of light provided from an external light source to display an image. For example, pixels that emit light may be located in the display area DA.

The non-display area NDA may be located around the display area DA. For example, the non-display area NDA may surround at least a portion of the display area DA (e.g., in a plan view). In an embodiment, the non-display area NDA may be an area that does not display an image. However, embodiments are not necessarily limited thereto, and an image may be displayed in at least a portion of the non-display area NDA. For example, a pixel that emits light may be located in at least a portion of the non-display area NDA.

The display devices DD and DD' may maintain a folded state and an unfolded state. For example, in an embodiment the display devices DD and DD' may be folded in an "in-folding" method in which the display area DA is located at an inside as illustrated in FIGS. 1B and 2B. When the display devices DD and DD' are folded in the in-folding method, front surfaces of the display devices DD and DD' may face each other. However, embodiments are not necessarily limited thereto, and the display devices DD and DD' may be folded in an "out-folding" method in which the display area DA faces the exterior. When the display devices DD and DD' are folded in the out-folding method, rear surfaces of the display devices DD and DD' may face each other.

In an embodiment, the display devices DD and DD' may include a folding area FDA, a first non-folding area NFA1, and a second non-folding area NFA2. The folding area FDA may be an area in which the display devices DD and DD' are bent or folded. The first non-folding area NFA1 and the second non-folding area NFA2 may be areas in which the display devices DD and DD' are not bent or folded. The first folding line FL1 may be a boundary between the folding area FDA and the first non-folding area NFA1. In addition, the second folding line FL2 may be a boundary between the folding area FDA and the second non-folding area NFA2. For example, the first folding line FL1 and the second folding line FL2 may be parallel to each other.

The first non-folding area NFA1 may directly contact the folding area FDA. For example, in an embodiment the first non-folding area NFA1 may directly contact one side of the folding area FDA. In an embodiment, as illustrated in FIGS. 1A and 1B, the first non-folding area NFA1 may contact a left side of the folding area FDA (e.g., in the first direction DR1). However, embodiments are not necessarily limited thereto, and in embodiments, as illustrated in FIGS. 2A and 2B, the first non-folding area NFA1 may directly contact a lower side of the folding area FDA (e.g., in the second direction DR2).

The second non-folding area NFA2 may directly contact the folding area FDA. The second non-folding area NFA2 may directly contact the other side of the folding area FDA. In an embodiment, as illustrated in FIGS. 1A and 1B, the second non-folding area NFA2 may contact a right side of the folding area FDA (e.g., in the first direction DR1). However, embodiments are not necessarily limited thereto, and in some embodiments, as illustrated in FIGS. 2A and 2B, the second non-folding area NFA2 may directly contact an upper side of the folding area FDA (e.g., in the second direction DR2).

In an embodiment, as illustrated in FIGS. 1A and 1B, each of the first folding line FL1 and the second folding line FL2 may extend in the second direction DR2. In this embodiment, the display device DD may be folded in the first direction DR1. Accordingly, the length of the display device DD in the first direction DR1 may be reduced by approximately half. Accordingly, it may be convenient for users to carry the display device DD.

In an embodiment, as illustrated in FIGS. 2A and 2B, each of the first folding line FL1 and the second folding FL2 may extend in the first direction DR1. In this embodiment, the display device DD' may be folded in the second direction DR2. Accordingly, the length of the display device DD' in the second direction DR2 may be reduced by approximately half. Accordingly, it may be convenient for the users to carry the display device DD'.

Embodiments described below may be equally applied to the display device DD of FIGS. 1A and 1B and the display device DD' of FIGS. 2A and 2B. Hereinafter, embodiments will be described based on the display device DD of FIGS. 1A and 1B for convenience of description.

In an embodiment, the first direction DR1 and the second direction DR2 crossing the first direction DR1 may be defined. For example, the second direction DR2 may be substantially perpendicular to the first direction DR1. However, embodiments are not necessarily limited thereto, and the second direction DR2 may form an acute angle or an obtuse angle with the first direction DR1. In addition, a third direction DR3 crossing a plane formed by the first direction DR1 and the second direction DR2 may be defined. For example, the third direction DR3 may be substantially perpendicular to the plane formed by the first direction DR1 and the second direction DR2. However, embodiments are not necessarily limited thereto, and the third direction DR3 may form an acute angle or an obtuse angle with the plane formed by the first direction DR1 and the second direction DR2.

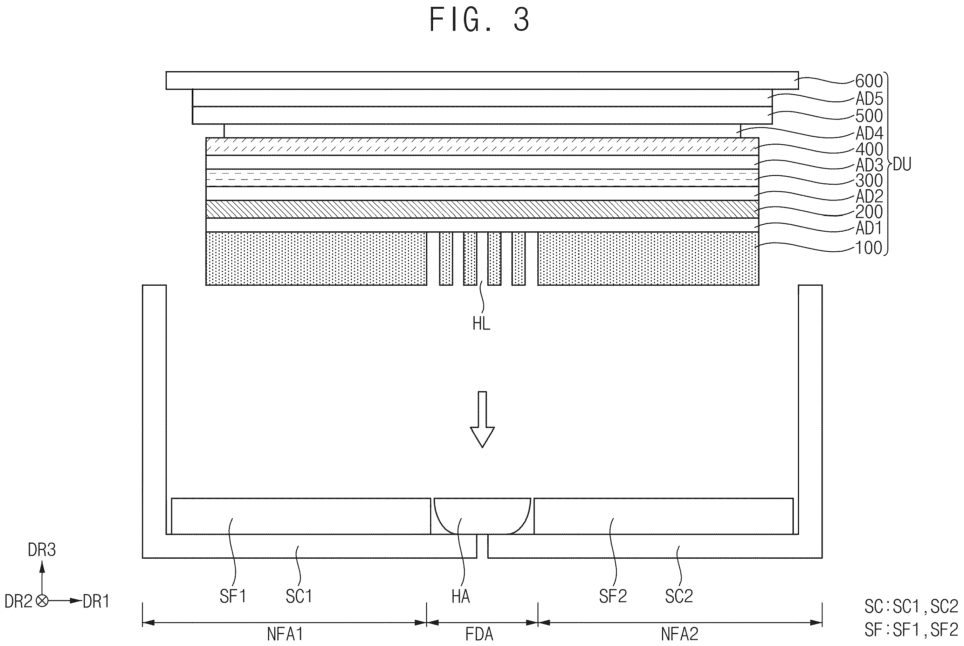

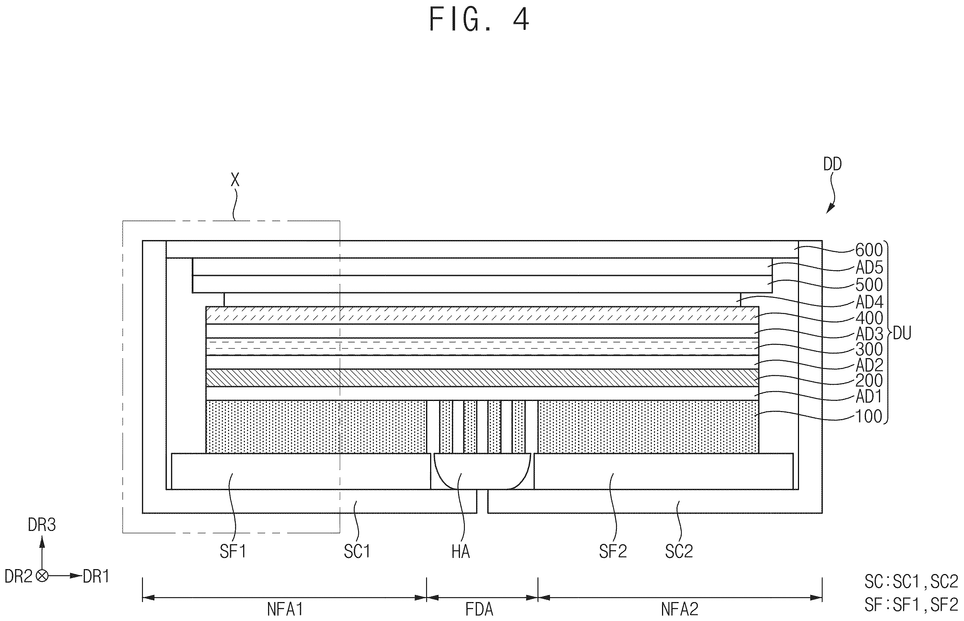

FIGS. 3 and 4 are cross-sectional views illustrating a plurality of components included in the display device of FIG. 1A or FIG. 1B.

Referring to FIGS. 3 and 4, the display device DD according to an embodiment may include a display unit DU, a frame SF, a case SC, and a hinge assembly HA.

In an embodiment, the display unit DU may include a metal plate 100, a panel lower member 200, a display panel 300, a polarizing film 400, a cover window 500, a protecting (protective) film 600, a first adhesive member AD1, a second adhesive member AD2, a third adhesive member AD3, a fourth adhesive member AD4, and a fifth adhesive member AD5.

The metal plate 100 may serve to support the display panel 300. In an embodiment, the metal plate 100 may include holes HL. The holes HL may be arranged in the folding area FDA. Each of the holes HL may be a portion removed from an upper surface to a lower surface of the metal plate 100. The holes HL may be spaced apart from each other along the first direction DR1 and repeatedly arranged. The metal plate 100 may include a metal. For example, in an embodiment the metal plate 100 may include silver ("Ag"), molybdenum ("Mo"), aluminum ("Al"), tungsten ("W"), copper ("Cu"), nickel ("Ni"), chromium ("Cr"), titanium ("Ti"), tantalum ("Ta"), platinum ("Pt"), scandium ("Sc"), and/or the like. These materials may be used alone or in combination with each other. However, embodiments are not necessarily limited thereto, and the metal plate 100 may include other types of metal.

The panel lower member 200 may be located on the metal plate 100. The panel lower member 200 may mitigate or absorb an impact applied to the display panel 300 from an outside of the display panel 300. Accordingly, the panel lower member 200 may prevent the display panel 300 from being damaged. The panel lower member 200 may be formed of a single layer or a plurality of layers. For example, in an embodiment the panel lower member 200 may include rubber, a urethane-based material, an acrylic-based material, a foam-molded sponge, and/or the like. These materials may be used alone or in combination with each other. However, embodiments are not necessarily limited thereto, and the panel lower member 200 may include other types of materials.

The panel lower member 200 may be attached to an upper surface of the metal plate 100. For example, in an embodiment the panel lower member 200 may be attached to the upper surface of the metal plate 100 by the first adhesive member AD1. The first adhesive member AD1 may include an optical clear adhesive ("OCA"), an optical clear resin ("OCR"), or a pressure sensitive adhesive ("PSA").

The display panel 300 may be located on the panel lower member 200 (e.g., in the third direction DR3). The display panel 300 may include pixels. Each of the pixels may emit light. In an embodiment, the pixels may be repeatedly arranged in the display panel 300 along the first direction DR1 and the second direction DR2. As each of the pixels emits light, the display panel 300 may display an image.

The display panel 300 may be attached to an upper surface of the panel lower member 200. For example, in an embodiment the display panel 300 may be attached to the upper surface of the panel lower member 200 by the second adhesive member AD2. The second adhesive member AD2 may include an optical clear adhesive ("OCA"), an optical clear resin ("OCR"), or a pressure sensitive adhesive ("PSA").

The polarizing film 400 may be located on the display panel 300 (e.g., in the third direction DR3). The polarizing film 400 may include a phase retardation film such as a linear polarizer or a λ/4 plate, but embodiments are not necessarily limited thereto.

The polarizing film 400 may be attached to an upper surface of the display panel 300. For example, in an embodiment the polarizing film 400 may be attached to the upper surface of the display panel 300 by the third adhesive member AD3. The third adhesive member AD3 may include an optical clear adhesive ("OCA"), an optical clear resin ("OCR"), or a pressure sensitive adhesive ("PSA").

The cover window 500 may be located on the polarizing film 400 (e.g., in the third direction DR3). For example, in an embodiment the cover window 500 may be an ultra thin glass ("UTG") or a polyimide film, but embodiments are not necessarily limited thereto.

The cover window 500 may be attached to an upper surface of the polarizing film 400. For example, in an embodiment the cover window 500 may be attached to the upper surface of the polarizing film 400 by the fourth adhesive member AD4. The fourth adhesive member AD4 may include an optical clear adhesive ("OCA"), an optical clear resin ("OCR"), or a pressure sensitive adhesive ("PSA").

The protecting film 600 may be located on the cover window 500 (e.g., in the third direction DR3). For example, the protecting film 600 may perform at least one function among shatter prevention, impact absorption, dent prevention, fingerprint resistance, and glare prevention, but embodiments are not necessarily limited thereto.

The protecting film 600 may be attached to an upper surface of the cover window 500. For example, in an embodiment the protecting film 600 may be attached to the upper surface of the cover window 500 by the fifth adhesive member AD5. The fifth adhesive member AD5 may include an optical clear adhesive ("OCA"), an optical clear resin ("OCR"), or a pressure sensitive adhesive ("PSA").

FIGS. 3 and 4 may illustrate an example in which the display unit DU includes the metal plate 100, the panel lower member 200, the display panel 300, the polarizing film 400, the cover window 500, and the protecting film 600, but embodiments are not necessarily limited thereto. For example, some components among the metal plate 100, the panel lower member 200, the display panel 300, the polarizing film 400, the cover window 500, and the protecting film 600 may be omitted, and/or other components may be added to the display unit DU.

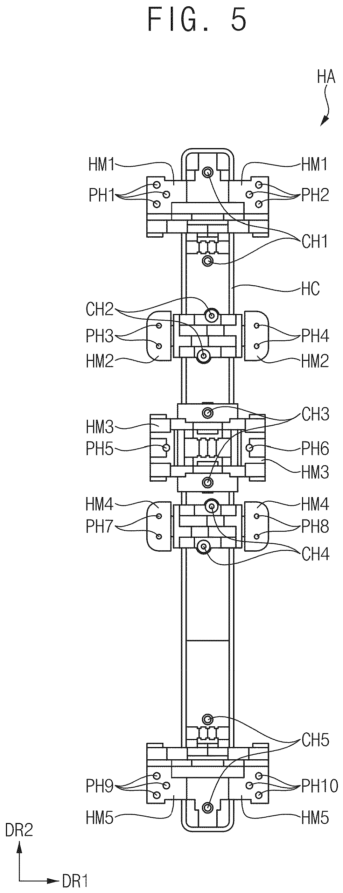

The frame SF may support the display unit DU below the display unit DU (e.g., directly below it in a direction opposite to the third direction DR3). The frame SF may directly contact a lowermost end of the display unit DU. For example, as illustrated in FIG. 4, the frame SF may directly contact the metal plate 100. In an embodiment, the frame SF may include a first frame SF1 and a second frame SF2. The first frame SF1 and the second frame SF2 may be spaced apart from each other in a plan view. For example, in an embodiment the first frame SF1 and the second frame SF2 may be spaced apart from each other in the first direction DR1. The first frame SF1 may be located at one side (e.g., a first side, such as a left side in the first direction DR1) of the hinge assembly HA, and the second frame SF2 may be located at the other side (e.g., an opposite second side, such as a right side in the first direction DR1) of the hinge assembly HA. For example, the first frame SF1 may be located at one side (e.g., a first side) of a hinge cover (e.g., a hinge cover HC of FIG. 5), and the second frame SF2 may be located at the other side (e.g., a second side) of the hinge cover. For example, in an embodiment the first frame SF1 may be located in the first non-folding area NFA1, and the second frame SF2 may be located in the second non-folding area NFA2. However, embodiments are not necessarily limited thereto, and each of the first frame SF1 and the second frame SF2 may also be located in a portion of the folding area FDA. The frame SF may include a material having rigidity. For example, in an embodiment the frame SF may include silver ("Ag"), molybdenum ("Mo"), aluminum ("Al"), tungsten ("W"), copper ("Cu"), nickel ("Ni"), chromium ("Cr"), titanium ("Ti"), tantalum ("Ta"), platinum ("Pt"), scandium ("Sc"), and/or the like. These materials may be used alone or in combination with each other. However, embodiments are not necessarily limited thereto, and the material included in the frame SF may vary depending on embodiments.

The case SC may accommodate the hinge assembly HA, the display unit DU, and the frame SF. For example, the case SC may include a bottom portion and a side portion, and an accommodation space may be defined by the bottom portion and the side portion. For example, the side portion may extend (e.g., extend directly) in the third direction DR3 from the bottom portion. The hinge assembly HA, the display unit DU, and the frame SF may be accommodated by the accommodation space of the case SC. For example, the hinge assembly HA, the display unit DU, and the frame SF may be inserted into the accommodation space. The case SC may directly contact an uppermost end of the display unit DU. For example, as illustrated in FIG. 4, the case SC may directly contact the protecting film 600. For example, the side portion of the case SC may directly contact the protecting film 600. In an embodiment, the case SC may include a first case SC1 and a second case SC2. The first case SC1 may be located at one side (e.g., a first side, such as a left side in the first direction DR1) of the hinge assembly HA, and the second case SC2 may be located at the other side (e.g., an opposite second side, such as a right side in the first direction DR1) of the hinge assembly HA. For example, the first case SC1 may be located at one side (e.g., a first side) of the hinge cover, and the second case SC2 may be located at the other side (e.g., an opposite second side) of the hinge cover. For example, in an embodiment the first case SC1 may be located in the first non-folding area NFA1 and the folding area FDA, and the second case SC2 may be located in the second non-folding area NFA2 and the folding area FDA. The case SC may include a material having rigidity. For example, in an embodiment the case SC may include silver ("Ag"), molybdenum ("Mo"), aluminum ("Al"), tungsten ("W"), copper ("Cu"), nickel ("Ni"), chromium ("Cr"), titanium ("Ti"), tantalum ("Ta"), platinum ("Pt"), scandium ("Sc"), and/or the like. These materials may be used alone or in combination with each other. However, embodiments are not necessarily limited thereto, and the material included in the case SC may vary depending on embodiments.

The hinge assembly HA may be accommodated by the case SC. The hinge assembly HA may be located below the display unit DU (e.g., in a direction opposite to the third direction DR3). The hinge assembly HA may be located in the folding area FDA. By a folding operation of the hinge assembly HA, the display device DD may be folded as illustrated in FIG. 1A. A structure of the hinge assembly HA will be described in detail with reference to FIG. 5.

FIG. 5 is a plan view schematically illustrating a hinge assembly according to an embodiment.

Referring to FIG. 5, in an embodiment the hinge assembly HA may include a hinge cover HC, a first hinge module HM1, a second hinge module HM2, a third hinge module HM3, a fourth hinge module HM4, and a fifth hinge module HM5. However, embodiments are not necessarily limited thereto and the number of the plurality of hinge modules may vary in which at least one of the plurality of hinge modules may control rotation of the frame SF and at least one of the plurality of hinge modules may control rotation of the case SC. For example, in some embodiments, the first hinge module HM1, third hinge module HM3 and fifth hinge module HM5 may control the rotation of the frame SF and may be referred to as a first-first hinge module, a second-first hinge module and a third-first hinge module, respectively, and the second hinge module HM2 and the fourth hinge module HM4 may control rotation of the case SC and may be considered a first-second hinge module and a second-second hinge module, respectively.

The hinge cover HC may be parallel to the first folding line (e.g., the first folding line FL1 of FIG. 1A) and the second folding line (e.g., the second folding line FL2 of FIG. 1A). For example, in an embodiment the hinge cover HC may extend in the second direction DR2. The hinge cover HC may not rotate during a folding operation and an unfolding operation of the hinge assembly HA.

Each of the hinge modules may be seated on the hinge cover HC. For example, as illustrated in FIG. 5, in an embodiment each of the first hinge module HM1, the second hinge module HM2, the third hinge module HM3, the fourth hinge module HM4, and the fifth hinge module HM5 may be seated on the hinge cover HC. In an embodiment, the first hinge module HM1, the second hinge module HM2, the third hinge module HM3, the fourth hinge module HM4, and the fifth hinge module HM5 may be arranged along a direction opposite to the second direction DR2. For example, the second hinge module HM2 may be spaced apart from the first hinge module HM1 in the direction opposite to the second direction DR2, the third hinge module HM3 may be spaced apart from the second hinge module HM2 in the direction opposite to the second direction DR2, the fourth hinge module HM4 may be spaced apart from the third hinge module HM3 in the direction opposite to the second direction DR2, and the fifth hinge module HM5 may be spaced apart from the fourth hinge module HM4 in the direction opposite to the second direction DR2. For example, the first hinge module HM1 and the third hinge module HM3 may be spaced apart from each other. The second hinge module HM2 may be located between (e.g., directly therebetween in the direction opposite to the second direction DR2) the first hinge module HM1 and the third hinge module HM3. The third hinge module HM3 and the fifth hinge module HM5 may be spaced apart from each other (e.g., in the direction opposite to the second direction DR2). The fourth hinge module HM4 may be located between the third hinge module HM3 and the fifth hinge module HM5 (e.g., in the direction opposite to the second direction DR2).

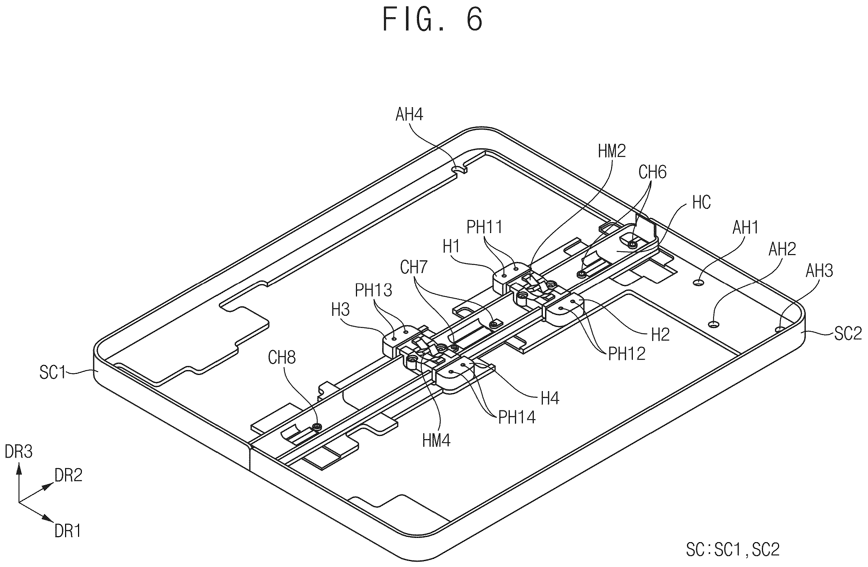

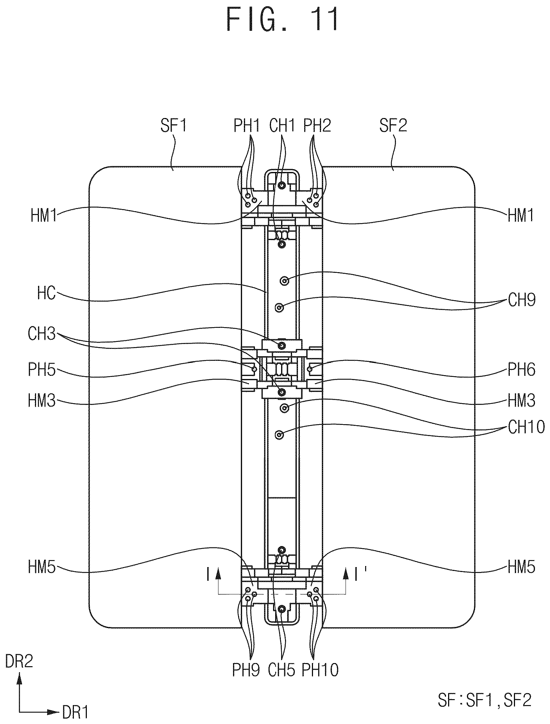

In an embodiment, the first hinge module HM1 may include a first fastening hole CH1. The second hinge module HM2 may include a second fastening hole CH2. The third hinge module HM3 may include a third fastening hole CH3. The fourth hinge module HM4 may include a fourth fastening hole CH4. The fifth hinge module HM5 may include a fifth fastening hole CH5. The hinge cover HC may include a sixth fastening hole (e.g., a sixth fastening hole CH6 of FIG. 6), a seventh fastening hole (e.g., a seventh fastening hole CH7 of FIG. 6), an eighth fastening hole (e.g., an eighth fastening hole CH8 of FIG. 6), a ninth fastening hole (e.g., a ninth fastening hole CH9 of FIG. 11), and a tenth fastening hole (e.g., a tenth fastening hole CH10 of FIG. 11).

The first hinge module HM1 may be fixed to the hinge cover HC. For example, the first hinge module HM1 may be fixed to the hinge cover HC by a coupling member inserted into the first fastening hole CH1 and the sixth fastening hole CH6 (FIG. 6). For example, the first hinge module HM1 and the hinge cover HC may be coupled to each other by the coupling member inserted into the first fastening hole CH1 and the sixth fastening hole CH6 (FIG. 6). In an embodiment, the coupling member inserted into the first fastening hole CH1 and the sixth fastening hole CH6 (FIG. 6) may include a screw, a bolt, and/or the like, but embodiments are not necessarily limited thereto.

The second hinge module HM2 may be fixed to the hinge cover HC. For example, the second hinge module HM2 may be fixed to the hinge cover HC by a coupling member inserted into the second fastening hole CH2 and the ninth fastening hole CH9 (FIG. 11). For example, the second hinge module HM2 and the hinge cover HC may be coupled to each other by the coupling member inserted into the second fastening hole CH2 and the ninth fastening hole CH9 (FIG. 11). In an embodiment, the coupling member inserted into the second fastening hole CH2 and the ninth fastening hole CH9 (FIG. 11) may include a screw, a bolt, and/or the like, but embodiments are not necessarily limited thereto.

The third hinge module HM3 may be fixed to the hinge cover HC. For example, the third hinge module HM3 may be fixed to the hinge cover HC by a coupling member inserted into the third fastening hole CH3 and the seventh fastening hole CH7 (FIG. 6). For example, the third hinge module HM3 and the hinge cover HC may be coupled to each other by the coupling member inserted into the third fastening hole CH3 and the seventh fastening hole CH7 (FIG. 6). In an embodiment, the coupling member inserted into the third fastening hole CH3 and the seventh fastening hole CH7 (FIG. 6) may include a screw, a bolt, and/or the like, but embodiments are not necessarily limited thereto.

The fourth hinge module HM4 may be fixed to the hinge cover HC. For example, the fourth hinge module HM4 may be fixed to the hinge cover HC by a coupling member inserted into the fourth fastening hole CH4 and the tenth fastening hole CH10 (FIG. 11). For example, the fourth hinge module HM4 and the hinge cover HC may be coupled to each other by the coupling member inserted into the fourth fastening hole CH4 and the tenth fastening hole CH10 (FIG. 11). In an embodiment, the coupling member inserted into the fourth fastening hole CH4 and the tenth fastening hole CH10 (FIG. 11) may include a screw, a bolt, and/or the like, but embodiments are not necessarily limited thereto.

The fifth hinge module HM5 may be fixed to the hinge cover HC. For example, the fifth hinge module HM5 may be fixed to the hinge cover HC by a coupling member inserted into the fifth fastening hole CH5 and the eighth fastening hole CH8 (FIG. 6). For example, the fifth hinge module HM5 and the hinge cover HC may be coupled to each other by the coupling member inserted into the fifth fastening hole CH5 and the eighth fastening hole CH8 (FIG. 6). In an embodiment, the coupling member inserted into the fifth fastening hole CH5 and the eighth fastening hole CH8 (FIG. 6) may include a screw, a bolt, and/or the like, but embodiments are not necessarily limited thereto.

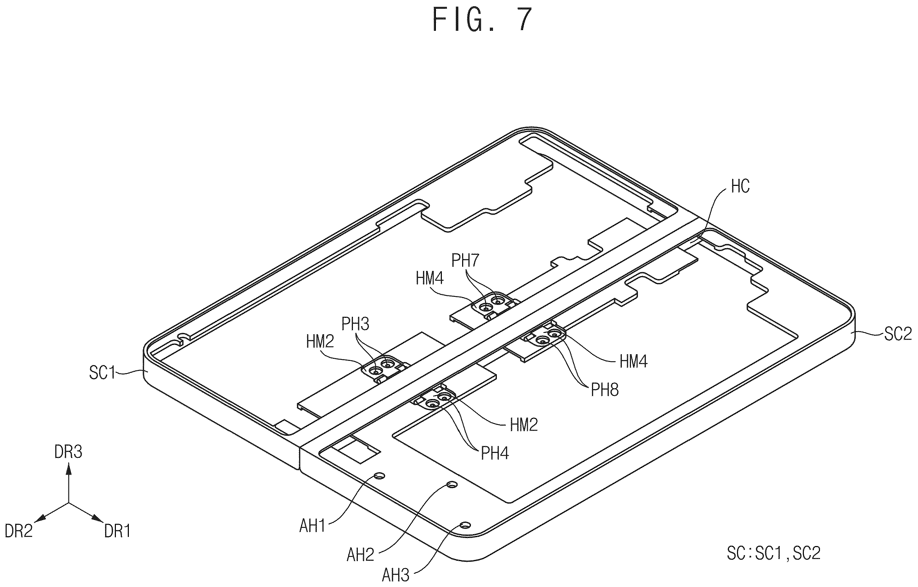

In an embodiment, the first hinge module HM1 may further include a first through hole PH1 and a second through hole PH2. The second hinge module HM2 may further include a third through hole PH3 and a fourth through hole PH4. The third hinge module HM3 may further include a fifth through hole PH5 and a sixth through hole PH6. The fourth hinge module HM4 may further include a seventh through hole PH7 and an eighth through hole PH8. The fifth hinge module HM5 may further include a ninth through hole PH9 and a tenth through hole PH10. The first through hole PH1, the second through hole PH2, the fifth through hole PH5, the sixth through hole PH6, the ninth through hole PH9, and the tenth through hole PH10 will be described in detail with reference to FIG. 11, and the third through hole PH3, the fourth through hole PH4, the seventh through hole PH7, and the eighth through hole PH8 will be described in detail with reference to FIG. 7.

In an embodiment, the first hinge module HM1, the third hinge module HM3, and the fifth hinge module HM5 may control rotation of the frame (e.g., the frame SF of FIG. 4). For example, the first hinge module HM1, the third hinge module HM3, and the fifth hinge module HM5 may guide rotational movement of the frame. In an embodiment, the second hinge module HM2 and the fourth hinge module HM4 may control rotation of the case (e.g., the case SC of FIG. 4). For example, the second hinge module HM2 and the fourth hinge module HM4 may guide rotational movement of the case (e.g., about an axis extending in the second direction DR2). Hereinafter, the first hinge module HM1, the third hinge module HM3, and the fifth hinge module HM5, which control the rotation of the frame, will be described in detail with reference to FIGS. 6 to 10, and the second hinge module HM2 and the fourth hinge module HM4, which control the rotation of the case, will be described in detail with reference to FIGS. 11 to 14.

FIG. 6 is a front perspective view schematically illustrating a hinge cover, a second hinge module, a fourth hinge module, and a case. FIG. 7 is a rear perspective view schematically illustrating the hinge cover, the second hinge module, the fourth hinge module, and the case.

In FIGS. 6 and 7, the first hinge module HM1, the third hinge module HM3, and the fifth hinge module HM5 of FIG. 5 may be omitted for convenience of explanation.

Referring to FIGS. 6 and 7, as described above, in an embodiment the case SC may include the first case SC1 and the second case SC2. The second hinge module HM2 and the fourth hinge module HM4 may control rotations of the first case SC1 and rotation of the second case SC2. For example, the second hinge module HM2 and the fourth hinge module HM4 may guide a rotational movement of the first case SC1 and a rotational movement of the second case SC2.

In an embodiment, the case SC may include a first accommodation space H1, a second accommodation space H2, a third accommodation space H3, and a fourth accommodation space H4. For example, as illustrated in FIG. 6, the first case SC1 may include the first accommodation space H1 and the third accommodation space H3, and the second case SC2 may include the second accommodation space H2 and the fourth accommodation space H4. In an embodiment, each of the first accommodation space H1, the second accommodation space H2, the third accommodation space H3, and the fourth accommodation space H4 may be a space defined by a sidewall and an upper surface included in the case SC.

In an embodiment, the case SC may further include an eleventh through hole PH11, a twelfth through hole PH12, a thirteenth through hole PH13, and a fourteenth through hole PH14. For example, as illustrated in FIG. 6, the first case SC1 may include the eleventh through hole PH11 and the thirteenth through hole PH13, and the second case SC2 may include the twelfth through hole PH12 and the fourteenth through hole PH14. For example, the eleventh through hole PH11 may be included in an upper surface defining the first accommodation space H1, the twelfth through hole PH12 may be included in an upper surface defining the second accommodation space H2, the thirteenth through hole PH13 may be included in an upper surface defining the third accommodation space H3, and the fourteenth through hole PH14 may be included in an upper surface defining the fourth accommodation space H4.

The first accommodating space H1 may accommodate a portion of the second hinge module HM2. In the first accommodating space H1, the second hinge module HM2 may be fixed to the first case SC1. For example, the second hinge module HM2 may be fixed to the first case SC1 by a coupling member inserted into the third through hole PH3 and the eleventh through hole PH11. For example, the second hinge module HM2 and the first case SC1 may be coupled to each other by the coupling member inserted into the third through hole PH3 and the eleventh through hole PH11. For example, the coupling member inserted into the third through hole PH3 and the eleventh through hole PH11 may include screws, bolts, and/or the like, but embodiments are not necessarily limited thereto.

The second accommodating space H2 may accommodate a portion of the second hinge module HM2. In the second accommodating space H2, the second hinge module HM2 may be fixed to the second case SC2. For example, the second hinge module HM2 may be fixed to the second case SC2 by a coupling member inserted into the fourth through hole PH4 and the twelfth through hole PH12. For example, the second hinge module HM2 and the second case SC2 may be coupled to each other by the coupling member inserted into the fourth through hole PH4 and the twelfth through hole PH12. For example, the coupling member inserted into the fourth through hole PH4 and the twelfth through hole PH12 may include screws, bolts, and/or the like, but embodiments are not necessarily limited thereto.

The third accommodating space H3 may accommodate a portion of the fourth hinge module HM4. In the third accommodating space H3, the fourth hinge module HM4 may be fixed to the first case SC1. For example, the fourth hinge module HM4 may be fixed to the first case SC1 by a coupling member inserted into the seventh through hole PH7 and the thirteenth through hole PH13. For example, the fourth hinge module HM4 and the first case SC1 may be coupled to each other by the coupling member inserted into the seventh through hole PH7 and the thirteenth through hole PH13. For example, the coupling member inserted into the seventh through hole PH7 and the thirteenth through hole PH13 may include screws, bolts, and/or the like, but embodiments are not necessarily limited thereto.

The fourth accommodating space H4 may accommodate a portion of the fourth hinge module HM4. In the fourth accommodating space H4, the fourth hinge module HM4 may be fixed to the second case SC2. For example, the fourth hinge module HM4 may be fixed to the second case SC2 by a coupling member inserted into the eighth through hole PH8 and the fourteenth through hole PH14. For example, the fourth hinge module HM4 and the second case SC2 may be coupled to each other by the coupling member inserted into the eighth through hole PH8 and the fourteenth through hole PH14. For example, the coupling member inserted into the eighth through hole PH8 and the fourteenth through hole PH14 may include screws, bolts, and/or the like, but embodiments are not necessarily limited thereto.

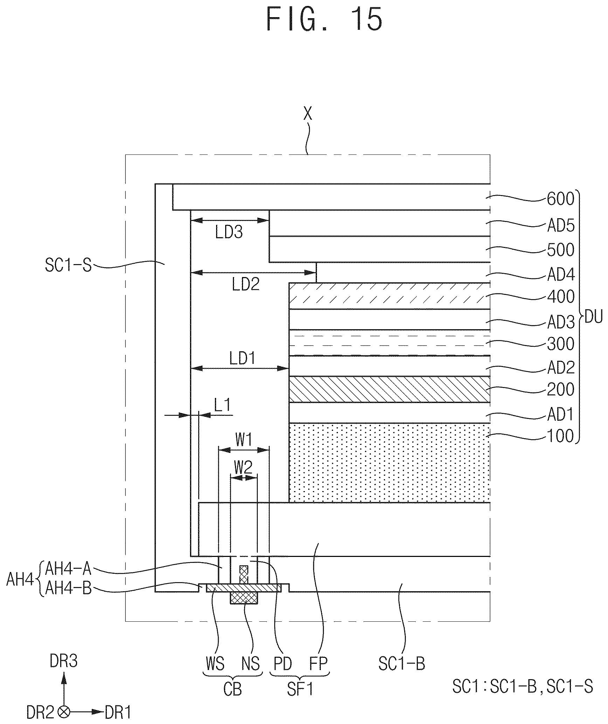

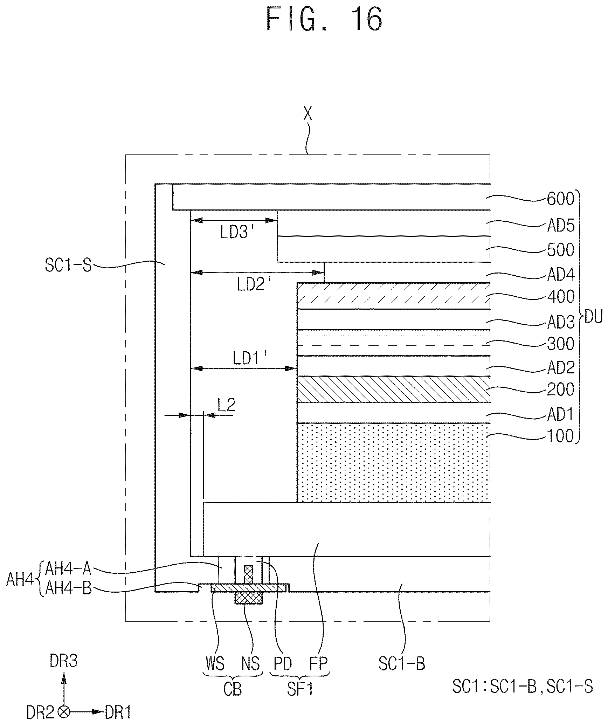

In an embodiment, the case SC may further include coupling holes. For example, as illustrated in FIGS. 6 and 7, the case SC may further include a first coupling hole AH1, a second coupling hole AH2, and a third coupling hole AH3. Each of the coupling holes may accommodate at least a portion of the frame (e.g., the frame SF of FIG. 6). A structure of the coupling holes will be described later in detail with reference to FIGS. 15 and 16.

In an embodiment, the case SC may further include coupling holes. For example, as illustrated in FIGS. 6 and 7, the case SC may further include a first coupling hole AH1, a second coupling hole AH2, and a third coupling hole AH3. Each of the coupling holes may accommodate at least a portion of the frame (e.g., the frame SF of FIG. 6). However, embodiments are not necessarily limited thereto and the number of coupling holes may vary, such as two or four or more in some embodiments. A structure of the coupling holes will be described in detail with reference to FIGS. 15 and 16.

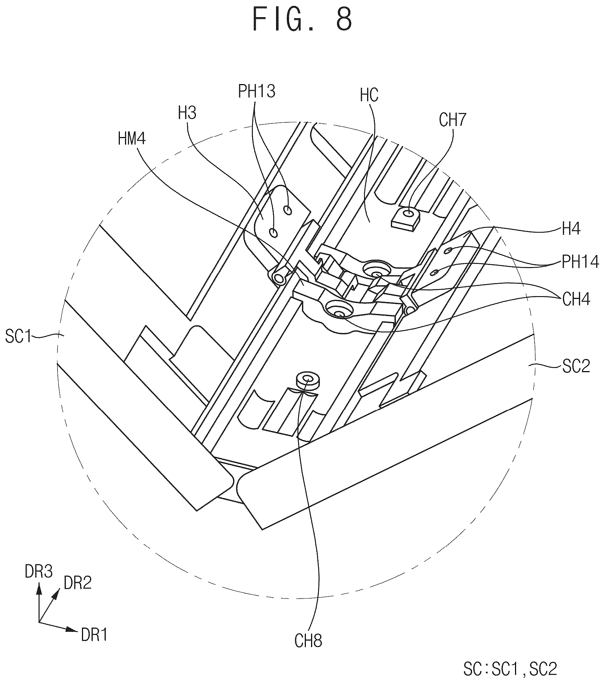

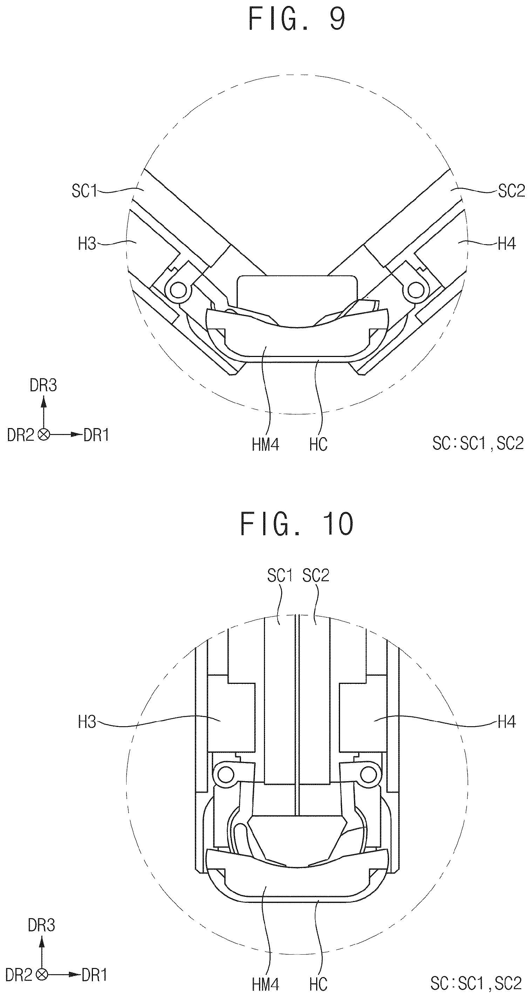

FIG. 8 is a front perspective view schematically illustrating a portion of the hinge cover, the fourth hinge module, and the case of FIG. 6. FIGS. 9 and 10 are views illustrating the hinge cover, the fourth hinge module, and the case of FIG. 6 viewed from a second direction.

Specifically, FIGS. 8 and 9 may illustrate a state in which folding of a display device (e.g., the display device DD of FIG. 4) is in progress according to a folding operation of the hinge assembly (e.g., the hinge assembly HA of FIG. 5), and FIG. 10 may illustrate a state in which the folding operation of the display device is completed and the display device is in a completely folded state.

Referring to FIGS. 8, 9, and 10, as described above, the second hinge module (e.g., the second hinge module HM2 of FIG. 6) and the fourth hinge module HM4 may control rotation of the case SC. For example, in an embodiment the second hinge module and the fourth hinge module HM4 may control rotation of the first case SC1 and the second case SC2. For example, when folding of the display device (e.g., the display device DD of FIG. 4) is in progress according to the folding operation of the hinge assembly (e.g., the hinge assembly HA of FIG. 5), the second hinge module and the fourth hinge module HM4 may control rotation of the first case SC1 and the second case SC2.

In an embodiment, the fourth hinge module HM4 may include a first portion fixed to the hinge cover HC, a second portion accommodated in the third accommodation space H3, and a third portion accommodated in the fourth accommodation space H4. The first portion may include the fourth fastening hole CH4. When the display device is folded according to the folding operation of the hinge assembly, the second portion and the third portion may rotate. For example, each of the second portion and the third portion may rotate with respect to (e.g., in an axis about) the second direction DR2. As the second portion rotates with respect to (e.g., in an axis about) the second direction DR2, the first case SC1 may rotate with respect to (e.g., in an axis about) the second direction DR2. As the third portion rotates with respect to the second direction DR2, the second case SC2 may rotate with respect to (e.g., in an axis about) the second direction DR2. The first portion may not move and may remain fixed to the hinge cover HC during the folding operation. The second hinge module HM2 and the fourth hinge module HM4 may have substantially the same structure as each other.

As illustrated in FIG. 10, when the folding of the display device is completed and the display device is in a completely folded state, the first case SC1 and the second case SC2 may face each other.

In addition, when the display device is unfolded according to an unfolding operation of the hinge assembly, the second hinge module HM2 and the fourth hinge module HM4 may similarly control rotation of the first case SC1 and the second case SC2.

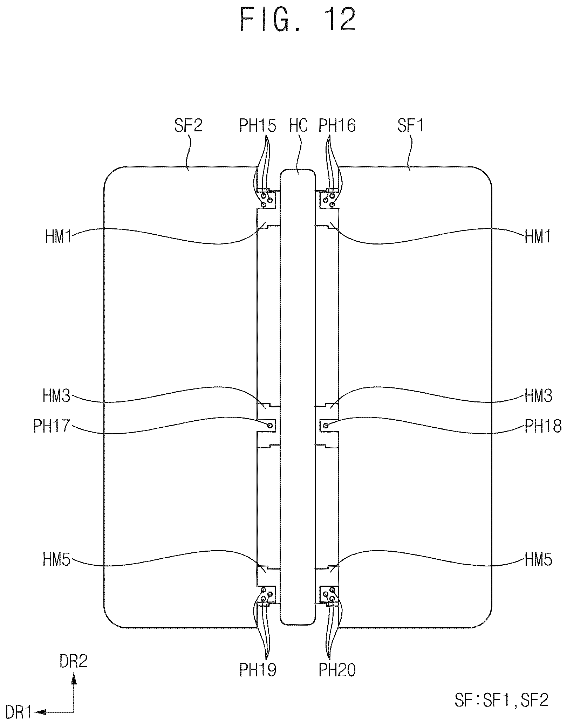

FIG. 11 is a plan view schematically illustrating the hinge cover, a first hinge module, a third hinge module, a fifth hinge module, and a frame. FIG. 12 is a rear view schematically illustrating the hinge cover, the first hinge module, the third hinge module, the fifth hinge module, and the frame.

In FIGS. 11 and 12, the second hinge module HM2 and the fourth hinge module HM4 of FIG. 5 may be omitted for convenience of explanation.

Referring to FIGS. 11 and 12, as described above, the frame SF may include the first frame SF1 and the second frame SF2. The first hinge module HM1, the third hinge module HM3, and the fifth hinge module HM5 may control rotations of the first frame SF1 and the second frame SF2. For example, the first hinge module HM1, the third hinge module HM3, and the fifth hinge module HM5 may guide a rotational movement of the first frame SF1 and a rotational movement of the second frame SF2.

In an embodiment, the frame SF may include a fifteenth through hole PH15, a sixteenth through hole PH16, a seventeenth through hole PH17, an eighteenth through hole PH18, a nineteenth through hole PH19, and a twentieth through hole PH20. For example, as illustrated in FIG. 12, in an embodiment the first frame SF1 includes the sixteenth through hole PH16, the eighteenth through hole PH18, and the twentieth through hole PH20, and the second frame SF2 may include the fifteenth through hole PH15, the seventeenth through hole PH17, and the nineteenth through hole PH19.

The first hinge module HM1 may be fixed to the first frame SF1. For example, the first hinge module HM1 may be fixed to the first frame SF1 by a coupling member inserted into the first through hole PH1 and the sixteenth through hole PH16. For example, the first hinge module HM1 and the first frame SF1 may be coupled to each other by the coupling member inserted into the first through hole PH1 and the sixteenth through hole PH16. For example, the coupling member inserted into the first through hole PH1 and the sixteenth through hole PH16 may include screws, bolts, and/or the like, but embodiments are not necessarily limited thereto.

The first hinge module HM1 may be fixed to the second frame SF2. For example, the first hinge module HM1 may be fixed to the second frame SF2 by a coupling member inserted into the second through hole PH2 and the fifteenth through hole PH15. For example, the first hinge module HM1 and the second frame SF2 may be coupled to each other by the coupling member inserted into the second through hole PH2 and the fifteenth through hole PH15. For example, the coupling member inserted into the second through hole PH2 and the fifteenth through hole PH15 may include screws, bolts, and/or the like, but embodiments are not necessarily limited thereto.

The third hinge module HM3 may be fixed to the first frame SF1. For example, the third hinge module HM3 may be fixed to the first frame SF1 by a coupling member inserted into the fifth through hole PH5 and the eighteenth through hole PH18. For example, the third hinge module HM3 and the first frame SF1 may be coupled to each other by the coupling member inserted into the fifth through hole PH5 and the eighteenth through hole PH18. For example, the coupling member inserted into the fifth through hole PH5 and the eighteenth through hole PH18 may include screws, bolts, and/or the like, but embodiments are not necessarily limited thereto.

The third hinge module HM3 may be fixed to the second frame SF2. For example, the third hinge module HM3 may be fixed to the second frame SF2 by a coupling member inserted into the sixth through hole PH6 and the seventeenth through hole PH17. For example, the third hinge module HM3 and the second frame SF2 may be coupled to each other by the coupling member inserted into the sixth through hole PH6 and the seventeenth through hole PH17. For example, the coupling member inserted into the sixth through hole PH6 and the seventeenth through hole PH17 may include screws, bolts, and/or the like, but embodiments are not necessarily limited thereto.

The fifth hinge module HM5 may be fixed to the first frame SF1. For example, the fifth hinge module HM5 may be fixed to the first frame SF1 by a coupling member inserted into the ninth through hole PH9 and the twentieth through hole PH20. For example, the fifth hinge module HM5 and the first frame SF1 may be coupled to each other by the coupling member inserted into the ninth through hole PH9 and the twentieth through hole PH20. For example, the coupling member inserted into the ninth through hole PH9 and the twentieth through hole PH20 may include screws, bolts, and/or the like, but embodiments are not necessarily limited thereto.

The fifth hinge module HM5 may be fixed to the second frame SF2. For example, the fifth hinge module HM5 may be fixed to the second frame SF2 by a coupling member inserted into the tenth through hole PH10 and the nineteenth through hole PH19. For example, the fifth hinge module HM5 and the second frame SF2 may be coupled to each other by the coupling member inserted into the tenth through hole PH10 and the nineteenth through hole PH19. For example, the coupling member inserted into the tenth through hole PH10 and the nineteenth through hole PH19 may include screws, bolts, and/or the like, but embodiments are not necessarily limited thereto.

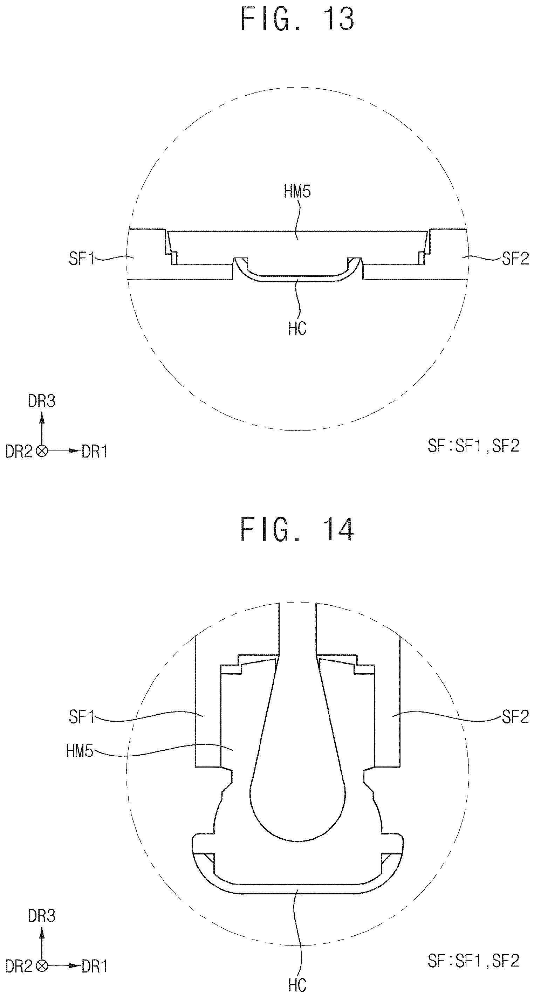

FIGS. 13 and 14 are cross-sectional views illustrating the frame, the fifth hinge module, and the hinge cover of FIG. 11 taken along the line I-I' .

Specifically, FIG. 13 may illustrate a state in which the display device (e.g., the display device DD of FIG. 4) is unfolded, and FIG. 14 may illustrate a state in which the display device is folded.

Referring to FIGS. 13 and 14, as described above, the first hinge module (e.g., the first hinge module HM1 of FIG. 5), the third hinge module (e.g., the third hinge module HM3 of FIG. 5), and the fifth hinge module HM5 may control rotation of the frame SF. For example, the first hinge module, the third hinge module, and the fifth hinge module HM5 may control rotation of the first frame SF1 and the second frame SF2. For example, when folding of the display device (e.g., the display device DD of FIG. 4) is in progress according to the folding operation of the hinge assembly (e.g., the hinge assembly HA of FIG. 5), the first hinge module, the third hinge module, and the fifth hinge module HM5 may control rotation of the first frame SF1 and the second frame SF2.

In an embodiment, the fifth hinge module HM5 may include a first portion fixed to the hinge cover HC, a second portion fixed to the first frame SF1, and a third portion fixed to the second frame SF2. The second portion may include the ninth through-hole (e.g., the ninth through-hole PH9 of FIG. 11), and the third portion may include the tenth through-hole (e.g., the tenth through-hole PH10 of FIG. 11). When folding of the display device is in progress according to the folding operation of the hinge assembly, the second portion and the third portion may rotate. For example, each of the second portion and the third portion may rotate with respect to (e.g., in an axis about) the second direction DR2. As the second portion rotates with respect to the second direction DR2, the first frame SF1 may rotate with respect to (e.g., in an axis about) the second direction DR2. As the third portion rotates with respect to the second direction DR2, the second frame SF2 may rotate with respect to (e.g., in an axis about) the second direction DR2. The first portion may not move and may remain fixed to the hinge cover HC during the folding operation. The first hinge module, the third hinge module, and the fifth hinge module HM5 may have substantially the same structure as each other.

As illustrated in FIG. 14, when folding of the display device is completed, the first frame SF1 and the second frame SF2 may face each other.

In addition, when unfolding of the display device is in progress according to the unfolding operation of the hinge assembly, the first hinge module, the third hinge module, and the fifth hinge module HM5 may control rotation of the first frame SF1 and the second frame SF2.

FIGS. 15 and 16 are enlarged cross-sectional views illustrating an example of an X area of FIG. 4.

Specifically, FIG. 15 may illustrate a state in which a display device (e.g., the display device DD of FIG. 4) is unfolded, and FIG. 16 may illustrate a state in which the display device is folded.

Referring to FIG. 15, the case (e.g., the case SC of FIG. 4) may include a bottom portion and a side portion. For example, as illustrated in FIG. 15, the first case SC1 may include a bottom portion SC1-B and a side portion SC1-S. The side portion SC1-S may extend from the bottom portion SC1-B. For example, the side portion SC1-S may extend from the bottom portion SC1-B in the third direction DR3.

As described above, in an embodiment the case (e.g., the case SC of FIG. 4) may include the first coupling hole (e.g., the first coupling hole AH1 of FIG. 6), the second coupling hole (e.g., the second coupling hole AH2 of FIG. 6), the third coupling hole (e.g., the third coupling hole AH3 of FIG. 6), and the fourth coupling hole AH4. For example, as illustrated in FIG. 15, the first case SC1 may include the fourth coupling hole AH4. For example, the bottom portion SC1-B may include the fourth coupling hole AH4. In an embodiment, the fourth coupling hole AH4 may include a first portion AH4-A and a second portion AH4-B. The second portion AH4-B may be located below the first portion AH4-A (e.g., in a direction opposite to the third direction DR3). In an embodiment, a width of the second portion AH4-B in the first direction DR1 may be greater than a width W1 of the first portion AH4-A in the first direction DR1. However, embodiments are not necessarily limited thereto, and the fourth coupling hole AH4 may include only the first portion AH4-A in some embodiments. The first coupling hole, the second coupling hole, the third coupling hole, and the fourth coupling hole AH4 may have substantially the same structure as each other.

In an embodiment, the fourth coupling hole AH4 may accommodate at least a portion of the frame (e.g., the frame SF of FIG. 4). For example, as illustrated in FIG. 15, the fourth coupling hole AH4 may accommodate at least a portion of the first frame SF1. In this embodiment, the first frame SF1 may include a flat portion FP directly contacting the display unit DU and a protruding portion PD (e.g., a protrusion portion) protruding from the flat portion FP (e.g., in a direction opposite to the third direction DR3). The protruding portion PD may be accommodated by the fourth coupling hole AH4.

In an embodiment, the frame may be fixed to the case. For example, as illustrated in FIG. 15, the first frame SF1 may be fixed to the first case SC1 within the fourth coupling hole AH4. For example, the first frame SF1 may be fixed to the first case SC1 through a coupling member CB within the fourth coupling hole AH4. In an embodiment, the coupling member CB may include a first coupling member NS and a second coupling member WS. In an embodiment, the first coupling member NS may be a screw, a bolt, and/or the like, but embodiments are not necessarily limited thereto. In an embodiment, the second coupling member WS may be a washer.

Referring to FIGS. 5, 15, and 16, as described above, the frame may directly contact the lowermost end of the display unit DU. The lowermost end of the display unit DU may be a component positioned at the lowest position among components included in the display unit DU. For example, as illustrated in FIG. 15, in an embodiment the lowermost end of the display unit DU may be the metal plate 100. However, embodiments are not necessarily limited thereto, and when the display unit DU further includes another component located below the metal plate 100, the lowermost end of the display unit DU may be such component located below the metal plate 100. In addition, as described above, in an embodiment the first hinge module HM1, the third hinge module HM3, and the fifth hinge module HM5 may control rotation of the frame (e.g., the frame SF of FIG. 4). Accordingly, the first hinge module HM1, the third hinge module HM3, and the fifth hinge module HM5 may control rotation of the lowermost end of the display unit DU directly contacting the frame. For example, the first hinge module HM1, the third hinge module HM3, and the fifth hinge module HM5 may control rotation of the metal plate 100 directly contacting the frame.

In addition, the case may directly contact the uppermost end of the display unit DU. For example, as illustrated in FIG. 15, the side portion SC1-S of the first case SC1 may directly contact the uppermost end of the display unit DU. For example, in an embodiment the uppermost end of the display unit DU may be fixed to the side portion SC1-S. For example, in an embodiment the uppermost end of the display unit DU may be fixed to the side portion SC1-S through optical clear adhesive ("OCA"), optical clear resin ("OCR"), pressure sensitive adhesive ("PSA"), and/or the like. The uppermost end of the display unit DU may be a component positioned at the top among components included in the display unit DU. For example, as illustrated in FIG. 15, in an embodiment the uppermost end of the display unit DU may be the protecting film 600. In an embodiment, a portion of the lower surface and lateral end of the protecting film 600 may directly contact the side portion SC1-S of the first case SC1. However, embodiments are not necessarily limited thereto, and when the display unit DU further includes another component located on the protecting film 600, the uppermost end of the display unit DU may be the component located on the protecting film 600. In addition, as described above, in an embodiment the second hinge module HM2 and the fourth hinge module HM4 may control rotation of the case (e.g., the case SC of FIG. 4). Accordingly, the second hinge module HM2 and the fourth hinge module HM4 may control rotation of the uppermost end of the display unit DU directly contacting the case. For example, the second hinge module HM2 and the fourth hinge module HM4 may control rotation of the protecting film 600 directly contacting the case.

In an embodiment, when folding of the display device is in progress according to the folding operation of the hinge assembly and the display device is folded from an unfolded state to a folded state, the second hinge module HM2 and the fourth hinge module HM4, which control rotation of the uppermost end of the display unit DU, may rotate with respect to a first axis, and the first hinge module HM1, the third hinge module HM3, and the fifth hinge module HM5, which control rotation of the lowermost end of the display unit DU, may rotate with respect to a second axis. In an embodiment, each of the first axis and the second axis may extend in the second direction DR2. In an embodiment, a position of the first axis and a position of the second axis may be different from each other in the plan view. Accordingly, rotation of the uppermost end of the display unit DU and rotation of the lowermost end of the display unit DU may be independently controlled. For example, rotation of the protecting film 600 and rotation of the metal plate 100 may be independently controlled.

As a position of the first axis and a position of the second axis are different from each other in the plan view, rotation of the uppermost end of the display unit DU and rotation of the lowermost end of the display unit DU are independently controlled, and the uppermost end of the display unit DU is fixed to the side portion SC1-S, when folding of the display device is in progress, components of the display unit DU except for the uppermost end may slip towards the folding area (e.g., the folding area FDA of FIG. 4).

For example, as illustrated in FIG. 16, when folding of the display device is in progress and the display device is being folded from an unfolded state to a folded state, each of the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5 may slip in the first direction DR1. In an embodiment, a degree to which the first adhesive member AD1, the second adhesive member AD2, the third adhesive member AD3, the fourth adhesive member AD4, and the fifth adhesive member AD5 slip during the folding operation may be greater than a degree to which the metal plate 100, the panel lower member 200, the display panel 300, the polarizing film 400, and the cover window 500 slip during the folding operation, but embodiments are not necessarily limited thereto.

Accordingly, a separation distance in the plan view between the metal plate 100 and the side portion SC1-S may increase during the folding operation. For example, in an embodiment the separation distance between the metal plate 100 and the side portion SC1-S may be in the first direction DR1. For example, when the display device is folded as illustrated in FIG. 16 from an unfolded state to a folded state, a separation distance LD1' in the plan view between one end (e.g., a first end) of the metal plate 100 and the side portion SC1-S may be greater than a separation distance LD1 in the plan view between one end (e.g., a first end) of the metal plate 100 and the side portion SC1-S when the display device is unfolded as illustrated in FIG. 15.

In addition, a separation distance in the plan view between the panel lower member 200 and the side portion SC1-S may increase during the folding operation. For example, in an embodiment the separation distance between the panel lower member 200 and the side portion SC1-S may be in the first direction DR1. For example, when the display device is folded as illustrated in FIG. 16, a separation distance LD1' in the plan view between one end (e.g., a first end) of the panel lower member 200 and the side portion SC1-S may be greater than a separation distance LD1 in the plan view between one end (e.g., a first end) of the panel lower member 200 and the side portion SC1-S when the display device is unfolded as illustrated in FIG. 15.

In addition, a separation distance in the plan view between the display panel 300 and the side portion SC1-S may increase during the folding operation. For example, in an embodiment the separation distance between the display panel 300 and the side portion SC1-S may be in the first direction DR1. For example, when the display device is folded as illustrated in FIG. 16, a separation distance LD1' in the plan view between one end (e.g., a first end) of the display panel 300 and the side portion SC1-S may be greater than a separation distance LD1 in the plan view between one end (e.g., a first end) of the display panel 300 and the side portion SC1-S when the display device is unfolded as illustrated in FIG. 15.

In addition, a separation distance in the plan view between the polarizing film 400 and the side portion SC1-S may increase during the folding operation. For example, in an embodiment the separation distance between the polarizing film 400 and the side portion SC1-S may be in the first direction DR1. For example, when the display device is folded as illustrated in FIG. 16, a separation distance LD1' in the plan view between one end (e.g., a first end) of the polarizing film 400 and the side portion SC1-S may be greater than a separation distance LD1 in the plan view between one end (e.g., a first end) of the polarizing film 400 and the side portion SC1-S when the display device is unfolded as illustrated in FIG. 15.

In addition, a separation distance in the plan view between the cover window 500 and the side portion SC1-S may increase during the folding operation. For example, in an embodiment the separation distance between the cover window 500 and the side portion SC1-S may be in the first direction DR1. For example, when the display device is folded as illustrated in FIG. 16, a separation distance LD3' in the plan view between one end (e.g., a first end) of the cover window 500 and the side portion SC1-S may be greater than a separation distance LD3 in the plan view between one end (e.g., a first end) of the cover window 500 and the side portion SC1-S when the display device is unfolded as illustrated in FIG. 15.

In addition, a separation distance in the plan view between the first adhesive member AD1 and the side portion SC1-S may increase during the folding operation. For example, in an embodiment the separation distance between the first adhesive member AD1 and the side portion SC1-S may be in the first direction DR1. For example, when the display device is folded as illustrated in FIG. 16, a separation distance LD1' in the plan view between one end (e.g., a first end) of the first adhesive member AD1 and the side portion SC1-S may be greater than a separation distance LD1 in the plan view between one end (e.g., a first end) of the first adhesive member AD1 and the side portion SC1-S when the display device is unfolded as illustrated in FIG. 15.

In addition, a separation distance in the plan view between the second adhesive member AD2 and the side portion SC1-S may increase during the folding operation. For example, in an embodiment the separation distance between the second adhesive member AD2 and the side portion SC1-S may be in the first direction DR1. For example, when the display device is folded as illustrated in FIG. 16, a separation distance LD1' in the plan view between one end (e.g., a first end) of the second adhesive member AD2 and the side portion SC1-S may be greater than a separation distance LD1 in the plan view between one end (e.g., a first end) of the second adhesive member AD2 and the side portion SC1-S when the display device is unfolded as illustrated in FIG. 15.

In addition, a separation distance in the plan view between the third adhesive member AD3 and the side portion SC1-S may increase during the folding operation. For example, in an embodiment the separation distance between the third adhesive member AD3 and the side portion SC1-S may be in the first direction DR1. For example, when the display device is folded as illustrated in FIG. 16, a separation distance LD1' in the plan view between one end of the third adhesive member AD3 and the side portion SC1-S may be greater than a separation distance LD1 in the plan view between the one end of the third adhesive member AD3 and the side portion SC1-S when the display device is unfolded as illustrated in FIG. 15.

In addition, a separation distance in the plan view between the fourth adhesive member AD4 and the side portion SC1-S may increase during the folding operation. For example, in an embodiment the separation distance between the fourth adhesive member AD4 and the side portion SC1-S may be in the first direction DR1. For example, when the display device is folded as illustrated in FIG. 16, a separation distance LD2' in the plan view between one end (e.g., a first end) of the fourth adhesive member AD4 and the side portion SC1-S may be greater than a separation distance LD2 in the plan view between one end (e.g., a first end) of the fourth adhesive member AD4 and the side portion SC1-S when the display device is unfolded as illustrated in FIG. 15.

In addition, a separation distance in the plan view between the fifth adhesive member AD5 and the side portion SC1-S may increase during the folding operation. For example, in an embodiment the separation distance between the fifth adhesive member AD5 and the side portion SC1-S may be in the first direction DR1. For example, when the display device is folded as illustrated in FIG. 16, a separation distance LD3' in the plan view between one end (e.g., a first end) of the fifth adhesive member AD5 and the side portion SC1-S may be greater than a separation distance LD3 in the plan view between one end (e.g., a first end) of the fifth adhesive member AD5 and the side portion SC1-S when the display device is unfolded as illustrated in FIG. 15.

In an embodiment, when folding of the display device is in progress according to the folding operation of the hinge assembly, the frame may slip towards the folding area. For example, as illustrated in FIG. 15, when folding of the display device is in progress, the first frame SF1 may slip in the first direction DR1. Accordingly, a separation distance in the plan view between one end (e.g., a first end) of the first frame SF1 and the side portion SC1-S may increase. For example, when the display device is folded as illustrated in FIG. 16, a separation distance L2 in the plan view (e.g., a distance in the first direction DR1) between the one end (e.g., a first end) of the first frame SF1 and the side portion SC1-S may be greater than a separation distance L1 in the plan view between one end (e.g., a first end) of the first frame SF1 and the side portion SC1-S when the display device is unfolded as illustrated in FIG. 15.

When folding of the display device is in progress, if each of the first frame SF1, the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5 slips in a direction away from the folding area, a significant space may be required to accommodate each of the first frame SF1, the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5. For example, when folding of the display device is in progress and the display device is moved from an unfolded state to a folded state, to prevent each of the first frame SF1, the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5 from directly contacting the side portion SC1-S, a significant space may be required between the side portion SC1-S and each of the following: the first frame SF1, the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5. In this case, a structure may be required to prevent such significant space from being recognized by the user.

In contrast, according to an embodiment, each of the first frame SF1, the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5 may slip towards the folding area (e.g., in the first direction DR1) when folding of the display device is in progress. Accordingly, when folding of the display device is in progress, a significant space to accommodate each of the first frame SF1, the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5 may not be necessary. Accordingly, each of the gaps between the side portion SC1-S and the first frame SF1, between the side portion SC1-S and one end (e.g., a first end) of the metal plate 100, between the side portion SC1-S and one end (e.g., a first end) of the panel lower member 200, between the side portion SC1-S and one end (e.g., a first end) of the display panel 300, between the side portion SC1-S and one end of the polarizing film 400, between the side portion SC1-S and one end (e.g., a first end) of the cover window 500, between the side portion SC1-S and one end (e.g., a first end) of the first adhesive member AD1, between the side portion SC1-S and one end (e.g., a first end) of the second adhesive member AD2, between the side portion SC1-S and one end (e.g., a first end) of the third adhesive member AD3, between the side portion SC1-S and one end (e.g., a first end) of the fourth adhesive member AD4, and between the side portion SC1-S and one end (e.g., a first end) of the fifth adhesive member AD5 may be minimized. As a result, dead space of the display device may be reduced. In addition, the structure for preventing the significant space from being recognized by the user may be omitted.

In addition, when the display device is folded and then unfolded again, components of the display unit DU other than the uppermost end may return (e.g., be restored) to a state before slipping. For example, when the display device is folded and then unfolded again, each of the first frame SF1, the metal plate 100, the panel lower member 200, the display panel 300, the polarizing film 400, the cover window 500, the first adhesive member AD1, the second adhesive member AD2, the third adhesive member AD3, the fourth adhesive member AD4, and the fifth adhesive member AD5 may return (e.g., be restored) to a state (e.g., a position) that they were in before slipping. For example, when the display device is folded and then unfolded again, the state of the display unit DU illustrated in FIG. 16 may return to the state of the display unit DU illustrated in FIG. 15. If the display device is folded again before the components of the display unit DU other than the uppermost end fully return to the state before slipping, the components of the display unit DU may deteriorate, or wrinkles or cracks may occur in the components of the display unit DU. According to an embodiment, the position of the first axis and the position of the second axis may be different from each other in the plan view, and rotation of the uppermost end and rotation of the lowermost end of the display unit DU may be independently controlled. Accordingly, when the display device is folded and then unfolded again, the components of the display unit DU other than the uppermost end may fully return to the state before slipping in a relatively short time. Accordingly, when the display device is folded again, deterioration of the components of the display unit DU may be prevented, and wrinkles, cracks, and/or the like in the components of the display unit DU may be prevented.

In an embodiment, a width W2 of the protruding portion PD in the first direction DR1 may be less than a width of the fourth coupling hole AH4 in the first direction DR1. For example, as illustrated in FIG. 15, the width W2 of the protruding portion PD in the first direction DR1 may be less than the width W1 of the first portion AH4-A in the first direction DR1. Accordingly, the protruding portion PD may move within the fourth coupling hole AH4. For example, as illustrated in FIG. 16, when the display device is folded according to the operation of the hinge assembly, the protruding portion PD may move in the first direction DR1 within the fourth coupling hole AH4. As the case includes the coupling holes, the frame may slip in the first direction DR1 and in a direction opposite to the first direction DR1 during folding and unfolding of the display device. In addition, as illustrated in FIG. 6, the number of the coupling holes may be four, but embodiments are not necessarily limited thereto, and the number of the coupling holes may vary depending on embodiments.

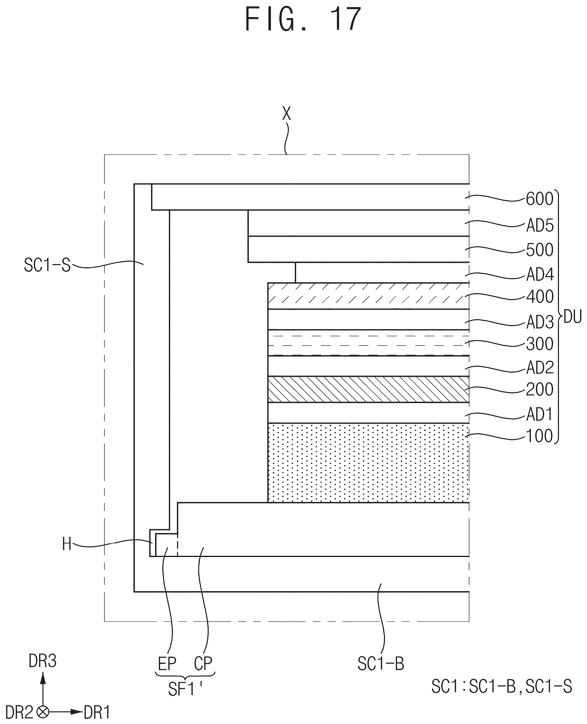

FIG. 17 is an enlarged cross-sectional view illustrating an example of an X area of FIG. 4.

Components of FIG. 17 may differ from components of FIG. 15 only in the first frame SF1. Therefore, overlapping descriptions may be omitted or simplified for economy of explanation.

Referring to FIG. 17, the first frame SF1' may be a configuration substantially corresponding to the first frame SF1 of FIG. 15. In an embodiment, the first frame SF1' may include a central portion CP (e.g., in a plan view) and an extension portion EP. The central portion CP may directly contact the display unit DU. The extension portion EP may extend from the central portion CP (e.g., extend directly therefrom in a direction opposite to the first direction DR1). For example, the extension portion EP may extend from the central portion CP in a direction away from the folding area (e.g., in a direction opposite to the first direction DR1). For example, as illustrated in FIG. 17, the extension portion EP may extend from the central portion CP in a direction opposite to the first direction DR1.

In an embodiment, the side portion SC1-S may include a groove H. The groove H may be a portion in which at least a portion of the side portion SC1-S is removed. The groove H may accommodate at least a portion of the frame (e.g., the frame SF of FIG. 11). For example, as illustrated in FIG. 17, the groove H may accommodate at least a portion of the extension portion EP. The extension portion EP may move within the groove H when the display device is folded. For example, when the display device is folded according to the operation of the hinge assembly, the extension portion EP may move within the groove H towards the folding area (e.g., in the first direction DR1). As the case includes the groove, the frame may slip in the first direction DR1 and in a direction opposite to the first direction DR1 during folding and unfolding of the display device.

The display device (e.g., the display device DD of FIG. 1A) according to an embodiment may be applied to various electronic devices. An electronic device according to an embodiment may include the above-described display device, and may further include a module or device having other additional functions in addition to the display device.

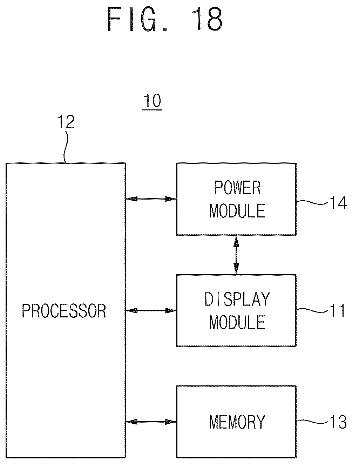

FIG. 18 is a block diagram illustrating an electronic device according to embodiments.

Referring to FIG. 18, an electronic device 10 according to an embodiment may include a display module 11, a processor 12, a memory 13, and a power module 14.

The processor 12 may include at least one of a central processing unit ("CPU"), an application processor ("AP"), a graphic processing unit ("GPU"), a communication processor ("CP"), an image signal processor ("ISP"), and a controller.

Data information necessary for operation of the processor 12 or the display module 11 may be stored in the memory 15. When the processor 12 executes an application stored in the memory 15, an image data signal and/or an input control signal is transmitted to the display module 11, and the display module 11 may process a received signal and output image information through a display screen.

The power module 14 may include a power supply module such as a power adapter or a battery device, and a power conversion module that converts power supplied by the power supply module to generate power required for operation of the electronic device 10.

At least one of components of the electronic device 10 described above may be included in the display device according to the above-described embodiments. In addition, some of individual modules functionally included in one module may be included in the display device, and others may be provided separately from the display device. For example, the display device may include the display module 11, and the processor 12, the memory 13, and the power module 14 may be provided in form of another device in the electronic device 10 other than the display device.

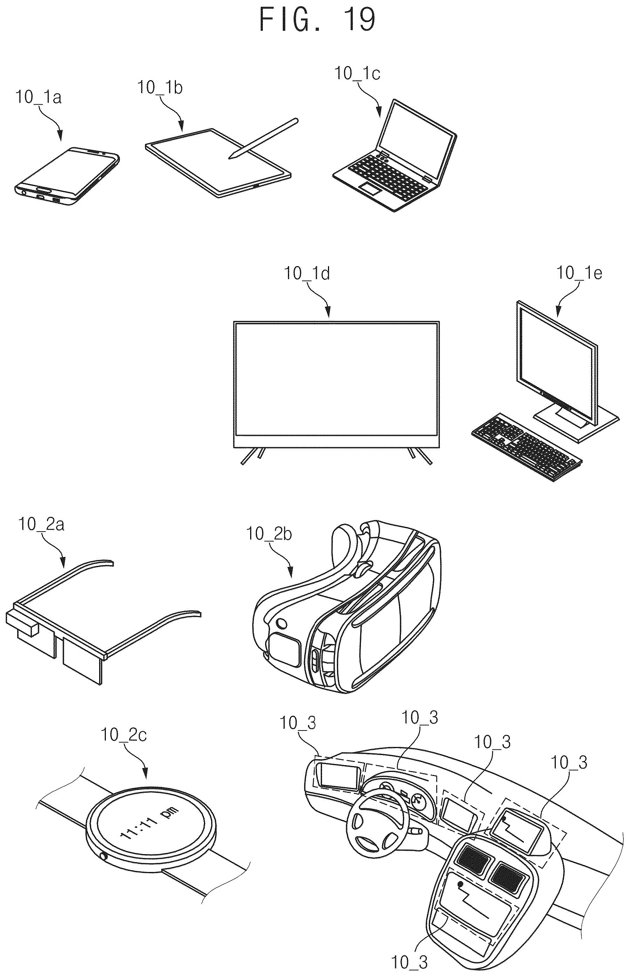

FIG. 19 is a schematic diagram of an electronic device according to various embodiments.

Referring to FIG. 19, various electronic devices to which display devices according to embodiments are applied may include not only electronic devices for image display such as a smartphone 10_1a, a tablet PC 10_1b, a laptop 10_1c, a TV 10_1d, a desk monitor 10_1e, and/or the like, but also wearable electronic devices including display modules such as a smart glass 10_2a, a head mounted display 10_2b, a smart watch 10_2c, and/or the like, vehicle electronic device 10_3 including display modules such as a vehicle's instrument panel, a center fascia, a center information display ("CID") disposed on a dashboard, a room mirror display, and/or the like.

Embodiments can be applied to various small-sized, medium-sized or large-sized display devices. For example, embodiments is applicable to various display devices such as display devices for vehicles, ships and aircraft, portable communication devices, display devices for exhibition or information transmission, medical display devices, and the like.

The foregoing is illustrative of embodiments and is not to be construed as limiting thereof. Although a few non-limiting embodiments have been described, those skilled in the art will readily appreciate that many modifications are possible in the described embodiments without materially departing from the novel teachings and advantages of the present inventive concept. Accordingly, all such modifications are intended to be included within the scope of the present inventive concept. Therefore, it is to be understood that the foregoing is illustrative of various embodiments and is not to be construed as limited to the specific described embodiments, and that modifications to the described embodiments, as well as other embodiments, are intended to be included within the scope of the present invention as defined by the claims.

## Claims

1. A display device comprising:
a display unit (DD, DD');
a frame (SF) supporting the display unit below the display unit;
a case (SC) accommodating the display unit and the frame; and
a hinge assembly (HA) including a hinge cover (HC), a first hinge module (HM1, HM3, HM5) seated on the hinge cover, and a second hinge module (HM2, HM4) seated on the hinge cover, wherein the first hinge module controls rotation of the frame and the second hinge module controls rotation of the case.

2. The display device of claim 1, wherein:
the case includes a first case (SC1) located at a first side of the hinge cover and a second case (SC2) located at an opposite second side of the hinge cover; and
the second hinge module controls rotation of the first case and rotation of the second case.

3. The display device of claim 1 or 2, wherein:
the frame includes a first frame (SF1) located at a first side of the hinge cover and a second frame (SF2) located at an opposite second side of the hinge cover; and
the first hinge module controls rotation of the first frame and rotation of the second frame.

4. The display device of claim 1, 2 or 3, wherein:
the case includes a first through hole;
the second hinge module includes a second through hole; and
the case and the second hinge module are coupled to each other by a coupling member inserted into the first through hole and the second through hole.

5. The display device of any one of the preceding claims, wherein:
the frame includes a first through hole;
the first hinge module includes a second through hole; and
the frame and the first hinge module are coupled to each other by a coupling member inserted into the first through hole and the second through hole.

6. The display device of any one of the preceding claims, wherein:
the frame directly contacts a lowermost end of the display unit; and
the case directly contacts an uppermost end of the display unit.

7. The display device of any one of the preceding claims, wherein the display unit includes:
a metal plate (100) directly contacting the frame;
a display panel (300) located on the metal plate;
a cover window (500) located on the display panel; and
a protective film (600) located on the cover window and directly contacting the case.

8. The display device of any one of the preceding claims, wherein:
the case includes a bottom portion and a side portion extending from the bottom portion; and
the bottom portion of the case includes a coupling hole accommodating at least a portion of the frame, optionally wherein the frame is fixed to the case through a washer in the coupling hole.

9. The display device of claim 8, wherein the frame includes:
a flat portion directly contacting the display unit; and
a protrusion portion protruding from the flat portion and accommodated by the coupling hole.

10. The display device of claim 9, wherein the protrusion portion is narrower in a first direction than the coupling hole, wherein the protrusion portion moves in the first direction within the coupling hole during a folding operation of the hinge assembly when the display device moves from an unfolded state to a folded state.

11. The display device of any one of the preceding claims, wherein:
the case includes a bottom portion and a side portion extending from the bottom portion; and
during a folding operation of the hinge assembly, a separation distance in a plan view between a first end of the frame and the side portion of the case increases when the display device moves from an unfolded state to a folded state.

12. The display device of claim 11, wherein the display unit includes:
a metal plate;
a display panel attached to an upper surface of the metal plate by a first adhesive member;
a cover window attached to an upper surface of the display panel by a second adhesive member; and
a protective film attached to an upper surface of the cover window by a third adhesive member and fixed to the side portion of the case,
wherein during the folding operation of the hinge assembly, each of a separation distance in the plan view between a first end of the first adhesive member and the side portion of the case, a separation distance in the plan view between a first end of the second adhesive member and the side portion of the case, and a separation distance in the plan view between a first end of the third adhesive member and the side portion of the case increases when the display device moves from an unfolded state to a folded state.

13. The display device of any one of claims 1 to 7, wherein:
the case includes a bottom portion and a side portion extending from the bottom portion;
the side portion of the case includes a groove accommodating at least a portion of the frame; and
the frame includes a central portion directly contacting the display unit and an extension portion extending directly from the central portion and accommodated by the groove, wherein the extension portion moves within the groove during a folding operation of the hinge assembly.

14. The display device of any one of the preceding claims,
wherein the hinge assembly further includes a third hinge module seated on the hinge cover and controlling rotation of the frame,
the first hinge module and the third hinge module are spaced apart from each other, and
the second hinge module is located between the first hinge module and the third hinge module.

15. A display device comprising:
a display unit;
a frame supporting the display unit below the display unit;
a case accommodating the display unit and the frame; and
a hinge assembly including a hinge cover, a first hinge module seated on the hinge cover, and a second hinge module seated on the hinge cover, wherein the first hinge module controls rotation of a lowermost end of the display unit and the second hinge module controls rotation of an uppermost end of the display unit, optionally wherein:
the frame directly contacts the lowermost end of the display unit; and
the case directly contacts the uppermost end of the display unit.
